# EUROPÄISCHE PATENTSCHRIFT

(11) **EP 3 224 510 B1**
(45) Veröffentlichungstag und Bekanntmachung des Hinweises auf die Patenterteilung: **21.10.2020**
(21) Anmeldenummer: 15813282.9
(22) Anmeldetag: 27.11.2015
(51) Int. Cl.: F16K 1/48

(54) **VENTILANORDNUNG**
VALVE ASSEMBLY
SYSTÈME DE SOUPAPE

(30) Priorität: 28.11.2014 DE 102014017549
(43) Veröffentlichungstag der Anmeldung: 04.10.2017
(73) Patentinhaber: Samson Aktiengesellschaft, 60314 Frankfurt (DE)
(72) Erfinder: KIRBS, Uwe, 60388 Frankfurt (DE); HESS, Michael, 60437 Frankfurt (DE); KUNZ, Bernd, 34549 Edertal (DE)
(74) Vertreter: Puschmann Borchert Kaiser Klettner Patentanwälte Partnerschaft mbB
(86) Internationale Anmeldenummer: PCT/EP2015/077960
(87) Internationale Veröffentlichungsnummer: WO 2016/083599

(56) Entgegenhaltungen:
- EP-A1- 2 171 322
- WO-A1-92/15809
- WO-A1-2009/123441
- WO-A1-2012/071723
- CH-A- 371 933
- DE-A1- 2 748 187
- FR-A- 1 464 085
- JP-A- H0 297 779
- SU-A1- 720 212
- US-A- 1 236 939
- US-A- 4 470 735

## Beschreibung

Die Erfindung betrifft eine Ventilanordnung umfassend einen Ventilschaft und einen Drosselkörper

Es ist bekannt, dass eine Ventilanordnung einen Ventilschaft, insbesondere zur axialen Betätigung eines Drosselkörpers, umfasst, der in Zusammenwirkung mit einem Ventilschaft einen Fluidstrom steuert oder absperrt. Es ist bekannt, dass der Ventilschaft und der Drosselkörper über ein Schraubgewinde verbindbar sind.

Dies erlaubt eine werkstoffunabhängige Verbindung. Diese Art der Verbindung hat jedoch den Nachteil, dass sie nicht verlustsicher ist.

Zur Verlustsicherung eines Drosselkörpers an einem Ventilschaft sind Lösungen - US 6,991,218 B2 - bekannt, die durch Einstecken eines Arretierstifts quer zur Ventilschaftachse ein Aufdrehen der Schraubverbindung verhindern, oder gemäß EP 1 564 462 A1 durch Einstecken eines Arretierstifts parallel zur Ventilschaftachse zur Achsrichtung.

Ferner ist aus der EP 2 171 322 B1 bekannt, eine korrespondierende Ausnehmung zwischen einem nicht schweißbaren Drosselkörper und einem schweißbaren Ventilschaft bereitzustellen und diese durch einen Schweißpunkt gegeneinander drehzusichern. Gemäß der US 4,705,062 wird eine Anbindung von Drosselkörpern und Schaft in Form eines durch plastischen Verformung hergestellten Formschlusses erreicht.

Die US 1, 236, 939 A1 offenbart ein Stellventil, bei dem ein Drosselkörper an eine Ventilstange angebunden wird, indem ein gewindetragendes Bauteil mit einem Klemmring an einer Ventilstange drehbar festgelegt wird. An das gewindetragende Bauteil kann der Drosselkörper angeschraubt werden.

Es ist Aufgabe der Erfindung, eine verlustsichere Verbindung eines Ventilschafts mit einem Drosselkörper basierend auf einem Schraubmechanismus anzugeben, damit eine einfache Endmontage ermöglicht wird.

In bekannter Weise umfasst eine Ventilanordnung einen Ventilschaft, insbesondere zur axialen Betätigung eines Drosselkörpers, der in Zusammenwirkung mit einem Ventilschaft einen Fluidstrom steuert oder absperrt. Es ist bekannt, dass der Ventilschaft und der Drosselkörper über ein Schraubgewinde verbindbar sind.

Ferner ist eine Rastverbindung vorgesehen, die aufgrund einer Rückstellkraft rastet und eine formschlüssige Verbindung herstellt, über die der Drosselkörper und der Ventilschaft verbunden sind. Die Rückstellkraft wirkt insbesondere orthogonal zur Formschlussrichtung.

Erfindungsgemäß umfasst die Rastverbindung Rastmittel, die während des Verbindungsvorgangs vorgespannt werden, und aufgrund der Rückstellkraft entgegen der Vorspannungsrichtung in korrespondierende Ausnehmungen einrasten. Die Ausnehmungen können am Schaft und / oder am Drosselkörper angebracht sein, wobei die Rastmittel am Schaft angeordnet sind.

Die Rastverbindung kann durch ein Rastmittel in Form eines offenen Rings gebildet sein, der nach vorangegangener Kompression durch seine Rückstellung in eine korrespondierende Nut, insbesondere eine Ringnut, einrastet. Solche offenen Ringe werden auch als Seegerring, Sicherungsring oder Sprengring bezeichnet.

Erfindungsgemäß wirkt die Rückstellkraft radial nach außen, um so einen Drosselkörper in Axialrichtung relativ zum Ventilschaft festzulegen. Liegen die Rastmittel in Eindrehrichtung vor oder nach dem Gewinde am Ventilschaft, führt dies dazu, dass ein Aufdrehen des Gewindes verhindert wird, indem die axiale Beweglichkeit des Drosselkörpers relativ zum Gewinde unterbunden ist.

In einer ersten Ausgestaltung können die Rastmittel derart angeordnet sein, dass ein Formschluss vorzugsweise in axialer Richtung wirkt.

Insbesondere kann dafür eine Ringnut im Drosselkörper vorgesehen sein, die zwischen der dem Ventilschaft zugewandten Drosselkörperoberfläche und einem in den Drosselkörper eingebrachten Gewinde liegt.

Auf diese Weise ergibt sich im Falle einer Vorspannung durch Kompression eine formschlüssige Verbindung zwischen einer ersten Ringnut am Drosselkörper und einer zweiten Ringnut am Ventilschaft. Der rückgestellte offene Ring stellt durch seine Rückstellung die Verbindung her.

Wird der offene Ring durch Kompression vorgespannt, kann vorgesehen sein, dass insbesondere im Drosselkörper ein Einführkonus vorgesehen ist, der den offenen Ring bei Einschrauben des Ventilschafts in den Drosselkörper komprimiert und damit radial vorspannt.

Alternativ kann der Formschluss auch in axialer Richtung erfolgen, indem der Drosselkörper in axialer Richtung in Einschraubrichtung jenseits des Gewindes liegt und korrespondierend am Drosselkörper jenseits des Gewindes eine Nut eingebracht sein.

So kann ein Drosselkörper ein Gewinde und eine Nut aufweisen und der Ventilschaft ein Gewinde und eine Nut, wobei nach dem Einschrauben des Gewindes durch die beiden korrespondierenden Nuten und dem offenen Ring ein axialer Formschluss bereitgestellt wird.

Dies kann erfolgen, indem der offene Ring in Einschraubrichtung jenseits des Gewindes liegt und durch Einschrauben aufgedehnt wird. Nachfolgend werden durch die Rückstellung des offenen Rings der Drosselkörper und der Ventilschaft in Axialrichtung formschlüssig festlegt.

Erfindungsgemäß weist der Ventilschaft ein Außengewinde und der Drosselkörper ein Innengewinde auf.

Der offene Ring kann eine Armierung aufweisen, um eine axiale Dämpfung und weitgehend spielfreie Lagerung zu ermöglichen.

Nach einer besonders vorteilhaften Ausgestaltung weisen der Ventilschaft und der Drosselkörper eine unterschiedliche Härte auf, wobei insbesondere der Drosselkörper härter als der Ventilschaft ist.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine teilweise Schnittansicht einer erfindungsgemäßen Ventilanordnung vor dem Zusammenbau;
- Fig. 2: eine Detailansicht einer erfindungsgemäßen Ventilanordnung gemäß Fig. 1 während des Zusammenbaus;
- Fig.3: eine erfindungsgemäße Ventilanordnung gemäß Fig. 1 nach dem Zusammenbau;
- Fig. 4: eine erfindungsgemäße Ventilanordnung nach dem Zusammenbau;
- Fig. 5A: eine Ventilanordnung mit Überwurfmutter vor dem Zusammenbau, und
- Fig. 5B: eine Ventilanordnung mit Überwurfmutter nach dem Zusammenbau.

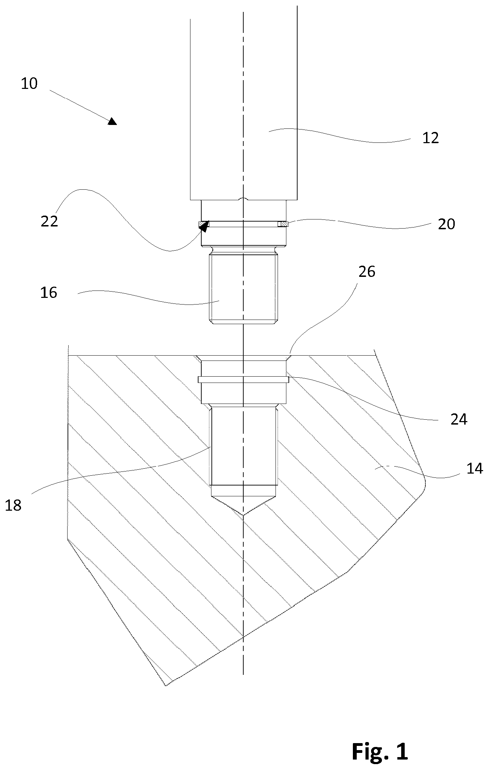

Fig. 1 zeigt eine teilweise Schnittansicht einer Ventilanordnung 10 umfassend einen Ventilschaft 12 und einen Drosselkörper 14, wobei der Ventilschaft 12 an seinem dem Drosselkörper 14 zugewandten Ende einen Gewindebereich 16 aufweist, der ein Außengewinde trägt, welches mit einem in den Drosselkörper 14 eingebrachten Muttergewinde 18 korrespondiert. Durch den Aufschraubvorgang kann der Drosselkörper 14 auf den Ventilschaft 12 aufgeschraubt werden. Um eine verlustsichere Halterung zu ermöglichen, ist ein offener Ring 20 vorgesehen, der in einer an dem Ventilschaft 12 angebrachten Nut 22 gehalten ist. Damit der offene Ring 20 mit dem Drosselkörper 14 eine Rastverbindung eingehen kann, ist im Drosselkörper 14 eine Nut 24 vorgesehen, in welche der offene Ring 20 nach Rückstellung in radialer Richtung nach außen einrastet. Um während des Einschraubvorgangs den offenen Ring 20 zu komprimieren, ist ein Einführkonus 26 an der Oberfläche des Drosselkörpers 14 vorgesehen. Bei einer axialen Bewegung in Einschraubrichtung wird der offene Ring 20 zunehmend komprimiert bis dieser sich nach einem zylindrischen Abschnitt im Bereich der Nut 24 rückstellt und eine Rastverbindung mit dem Drosselkörper 14 herstellt.

Durch diese Rastverbindung wird ein Formschluss in axialer Richtung bereitgestellt, der ein Aufdrehen des Gewindes in sehr engen Grenzen hält und dadurch eine Verlustsicherung gewährleistet.

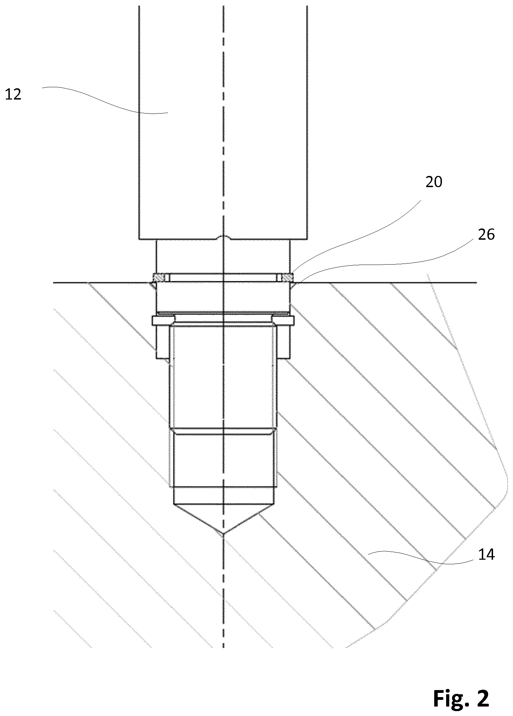

Fig. 2 zeigt eine Detailansicht der Ventilanordnung gemäß Fig. 1, bei welcher sich Ventilschaft 12 und Drosselkörper 14 in einer Position befinden, in welcher der offene Ring 20 gerade am Einführkonus 26 komprimiert wird.

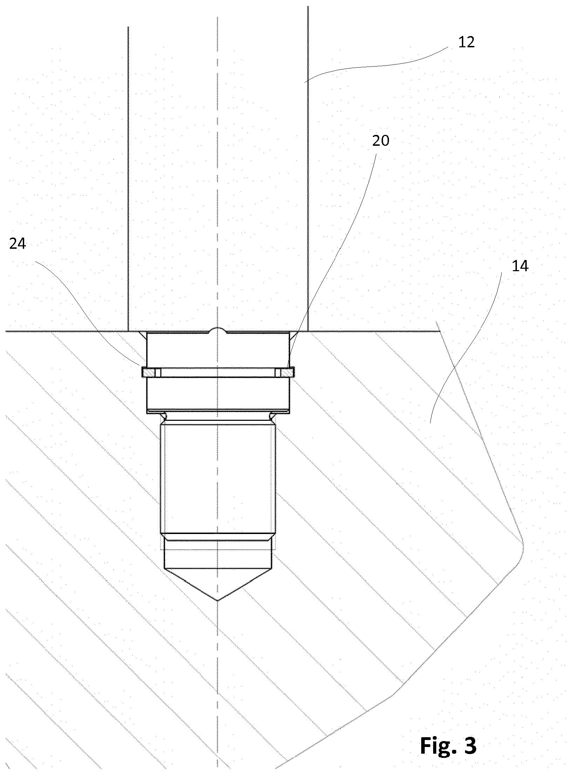

Fig. 3 zeigt die Ventilanordnung gemäß Fig.1 gemäß der der Ventilschaft 12 und Drosselkörper 14 verbunden sind, indem das Schraubgewinde vollständig in den Drosselkörper 14 eingeschraubt ist und der offene Ring 20 nach Wiederauffedern in die Nut 24 einrastet, um eine formschlüssige Verbindung zwischen Drosselkörper 14 und Ventilschaft 12 in axialer Richtung herzustellen. Dadurch wird eine Verlustsicherung gewährleistet. Ein zerstörungsfreies Lösen einer solchen Verbindung ist nicht möglich.

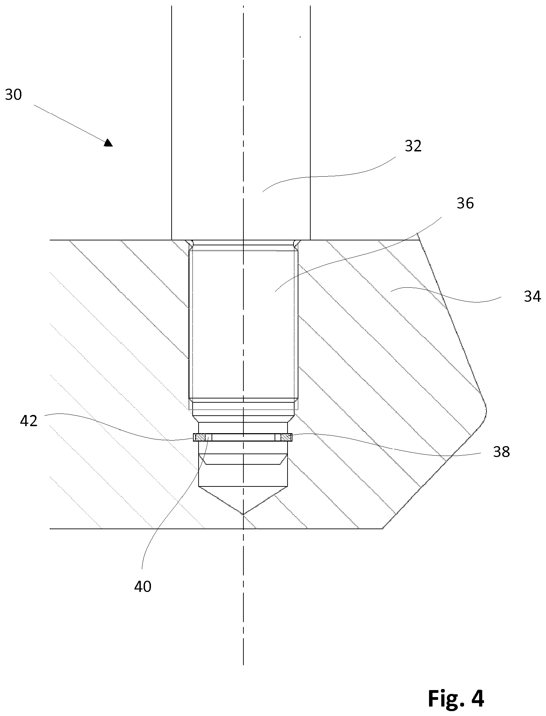

Fig. 4 zeigt eine weitere Ausgestaltung einer Ventilanordnung 30 umfassend einen Ventilschaft 32 sowie einen Drosselkörper 34. Der Drosselkörper 34 und der Ventilschaft 32 sind über ein korrespondierendes Gewinde 36 verbunden. Gemäß dieser Ausgestaltung weist die in den Drosselkörper 34 eingebrachte Bohrung in axialer Richtung in Einschraubrichtung jenseits des Gewindes eine Nut 40 auf, in welche ein offener Ring 38 eingesetzt ist. Der offene Ring 38 ist in der Nut 40 in axialer Richtung festgelegt. Der Ventilschaft 32 weist jenseits seines gewindetragenden Teils in Einschraubrichtung ebenfalls eine Nut und ein daran anschließendes verjüngtes Ende auf. Dieses verjüngte Ende ist geeignet, während des Einschraubvorgangs den in axialer Richtung festgelegten offenen Ring 38 aufzuweiten, wobei dieser nach Ende des Einschraubvorgangs in der Position der am Ventilschaft 32 angebrachten Nut 40 radial nach innen rückfedert. Alternativ kann der offene Ring 38 auch auf den Schaft in die Nut 40 eingesetzt sein. Dieser wird dann bei Einschrauben komprimiert und weitet sich in der Nut 42 wieder rückfedernd auf, um den Formschluss herzustellen.

Wie auch in Fig. 1 ergibt sich hier ebenfalls eine nicht lösbare Verbindung, wodurch eine Verlustsicherung gewährleistet ist, da ein Abschrauben des Drosselkörpers 34 aufgrund der axialen Festlegung nicht mehr möglich ist.

Die Endmontage erfolgt auf sehr einfache Weise durch Aufschrauben des Drosselkörpers 34 auf den Ventilschaft 32, wodurch die Rastverbindung durch den rückfedernden offenen Ring 38 automatisch hergestellt wird.

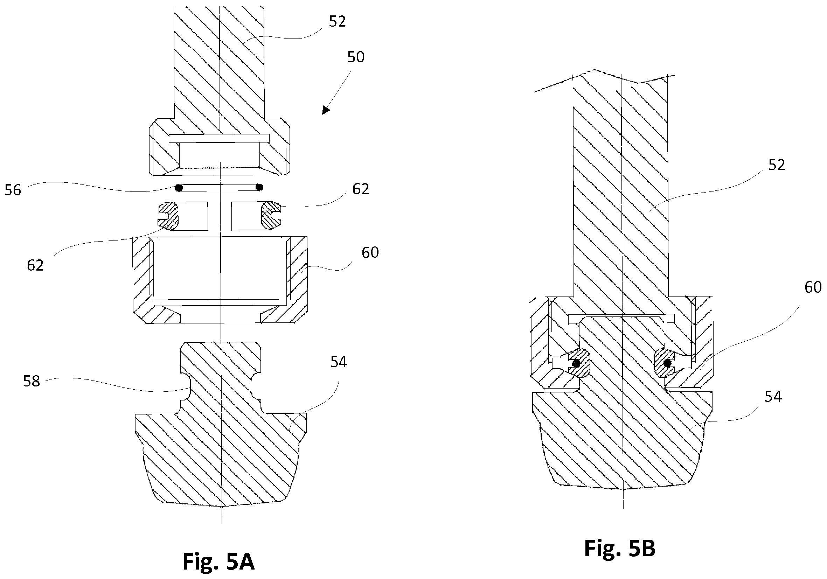

Fig. 5A zeigt eine Ausgestaltung einer Ventilanordnung 50 umfassend einen Ventilschaft 52 sowie einen Drosselkörper 54. Die Verbindung zwischen Ventilschaft 52 und Drosselkörper 54 ist über eine Überwurfmutter 60 hergestellt, die auf den Ventilschaft 52 aufschraubbar ist. Die Überwurfmutter 60 stellt eine Öffnung bereit, in welche der Drosselkörper 54 eingesetzt wird und dort über einen elastischen O-Ring 56, die Ringabschnitte 62 umgreift, die nach seiner Aufdehnung in eine am Drosselkörper 54 vorgesehene Nut 58 einrasten. Dadurch wird die axiale Beweglichkeit des Drosselkörpers 54 gegenüber der Überwurfmutter 60 verhindert. Der Drosselkörper 54 wird durch die Ringabschnitte 62 nahezu spielfrei an der Überwurfmutter 60 festlegt. In dieser Ausgestaltung sind die Ringabschnitte 62 aus Metall ausgebildet.

Endgültig kann, wie Fig. 5B zeigt, die Überwurfmutter 60 zusammen mit dem Drosselkörper 54 am Ventilschaft 52 festgeschraubt werden. Diese Art der Ausgestaltung hat den Vorteil, dass die Überwurfmutter 60 aus demselben Material wie der Ventilschaft 52 hergestellt werden kann, wodurch eine stoffschlüssige Verbindung, beispielsweise durch Schweißen der beiden Komponenten, ermöglicht wird und eine Aufdrehsicherung und Verlustsicherung der Überwurfmutter 60 relativ zum Ventilschaft 52 bereitgestellt wird. Der über den offenen Ring 56 formschlüssig gegenüber der Überwurfmutter 60 gelagerte Drosselkörper 54 kann dabei aus einem unterschiedlichen, insbesondere härterem Material, gebildet sein als der Ventilschaft 52 und die Überwurfmutter 60.

In einer weiteren vorteilhaften Ausgestaltung kann die Verbindung unterschiedlicher Materialien mit einfacher Endmontage bereitgestellt werden.

### Bezugszeichenliste

- 10: Ventilanordnung
- 12: Ventilschaft
- 14: Drosselkörper
- 16: Gewindebereich
- 18: Muttergewinde
- 20: offener Ring
- 22: Nut
- 24: Nut
- 26: Einführkonus
- 30: Ventilanordnung
- 32: Ventilschaft
- 34: Drosselkörper
- 36: Gewinde
- 38: offener Ring
- 40: Nut
- 42: Nut
- 50: Ventilanordnung
- 52: Ventilschaft
- 54: Drosselkörper
- 56: O-Ring
- 58: Nut
- 60: Überwurfmutter
- 62: Ringabschnitt

## Patentansprüche

1. Ventilanordnung (10) umfassend einen Ventilschaft (12) und einen Drosselkörper (14), wobei der Ventilschaft (12) und der Drosselkörper (14) über ein Schraubgewinde drehfest verbindbar sind und ferner eine Rastverbindung (20) vorgesehen ist, die aufgrund einer Rückstellkraft rastet und eine formschlüssige Verbindung herstellt, über die der Drosselkörper (14) und Ventilschaft (12) verbunden sind wobei der Ventilschaft (12) ein Außengewinde und der Drosselkörper (14) ein Innengewinde aufweist und ferner die Rastverbindung ein Rastmittel aufweist, das als offener Ring (20) ausgebildet ist, wobei der offene Ring (20) zur Herstellung der' formschlüssigen Verbindung eine radial nach außen gerichtete Rückstellkraft ausübt

2. Ventilanordnung nach Anspruch 1, **dadurch gekennzeichnet, dass** der Formschluss in axialer Richtung wirkt.

3. Ventilanordnung nach Anspruch 1 oder 2, **dadurch gekennzeichnet, dass** der offene Ring (20, 38) zwischen zwei Ringnuten (22, 24, 40, 42) geklemmt ist.

4. Ventilanordnung nach einem der vorangehenden Ansprüche, **dadurch gekennzeichnet, dass** der Ventilschaft (12) und der Drosselkörper (14) eine unterschiedliche Härte aufweisen.

## Claims

1. Valve arrangement (10) comprising a valve shaft (12) and a throttle body (14), wherein said valve shaft (12) and said throttle body (14) are adapted to be non-rotatably connected via a screw thread, and wherein a latching connection (20) is furthermore provided that engages as a result of a restoring force and produces a positive locking connection which connects the throttle body (14) to the valve shaft (12), wherein the valve shaft (12) is externally threaded and the throttle body (14) is internally threaded, and wherein the latching connection furthermore has latching means designed as a split ring (20), which split ring (20) exerts a restoring force that is directed radially outwards for producing the positive locking connection.

2. Valve arrangement according to claim 1, **characterized in that** the positive locking connection acts in the axial direction.

3. Valve arrangement according to one of claims 1 and 2, **characterized in that** the split ring (20, 38) is clamped between two annular grooves (22, 24, 40, 42).

4. Valve arrangement according to any one of the preceding claims, **characterized in that** the valve shaft (12) and the throttle body (14) are of different hardness.

## Revendications

1. Ensemble soupape (10) comprenant une tige de soupape (12) et un corps d'étranglement (14), dans lequel la tige de soupape (12) et le corps d'étranglement (14) peuvent être reliés l'une à l'autre de manière solidaire en rotation par l'intermédiaire d'un filet de vis et une liaison par encliquetage (20) est prévue en outre, qui réalise un encliquetage en raison d'une force de rappel et établit une liaison par coopération de formes, par l'intermédiaire de laquelle le corps d'étranglement (14) et la tige de soupape (12) sont reliés, dans lequel la tige de soupape (12) présente un filetage mâle et le corps d'étranglement (14) un filetage femelle et la liaison par encliquetage présente en outre un moyen d'encliquetage, qui est réalisé sous la forme d'une bague ouverte (20), dans lequel la bague ouverte (20), pour l'établissement de la liaison par coopération de formes, exerce une force de rappel dirigée radialement vers l'extérieur.

2. Ensemble soupape selon la revendication 1, **caractérisé en ce que** la coopération de formes agit dans la direction axiale.

3. Ensemble soupape selon la revendication 1 ou 2, **caractérisé en ce que** la bague ouverte (20, 38) est coincée entre deux rainures annulaires (22, 24, 40, 42).

4. Ensemble soupape selon l'une quelconque des revendications précédentes, **caractérisé en ce que** la tige de soupape (12) et le corps d'étranglement (14) présentent une dureté différente.
